# EUROPEAN PATENT SPECIFICATION

(11) **EP 0 577 133 B1**
(45) Date of publication and mention of the grant of the patent: **21.02.1996**
(21) Application number: 93110544.9
(22) Date of filing: 01.07.1993
(51) Int. Cl.: B60R 3/02

(54) **Sliding step for a utility vehicle with a locking device**
Schiebetritt eines Nutzfahrzeuges mit Verriegelungseinrichtung
Marche coulissante de véhicule utilitaire comportant un dispositif de verrouillage

(30) Priority: 03.07.1992 DE 4221871
(43) Date of publication of application: 05.01.1994
(73) Proprietor: IVECO MAGIRUS AG, D-89079 Ulm (DE)
(72) Inventor: Wälde, Frank, W-7819 Denzlingen (DE); Rombach, Martin, W-7832 Kenzingen (DE)
(74) Representative: Boggio, Luigi

(56) References cited:
- FR-A- 1 235 999
- GB-A- 1 541 411
- US-A- 3 341 223

## Description

The invention relates to a sliding step for a utility vehicle, in particular a fire engine, with a locking device for locking a treadboard in a retracted position in which it is not used, which treadboard can be pulled out into an essentially horizontal position for use.

Known sliding steps of the above-mentioned type have locking devices in the form of snap pins, cable locking elements and/or lever systems, etc. with a special control switch for the purpose of indicating the interlocked state.

A sliding step according to the preamble of claim 1 is known from GB-A-1 541 411.

The mechanical components and the special control switch which is required, together with the electrical lines, make the installation complicated and expensive, while the locking mechanism as a whole is also very complicated. The parts which are moved during the locking process are susceptible to faults and require intricate maintenance and repair work at places which are frequently difficult to reach.

The object of the invention is to provide a sliding step of the above-mentioned type which is distinctly simpler than the prior art and can be reliably locked.

The object on which the invention is based is solved by the features presented in the characterising part of claim 1.

The subject matter of the invention is developed in an advantageous manner by the features of subclaims 2 to 5.

The essence of the invention is to provide a strikingly simple locking device for a sliding step by making a part of the locking device a bottom fastening member of an essentially vertical roller blind, which is in any case present in a fire engine or the like, which member can be made to interlock with the essentially horizontal treadboard when the roller blind is closed.

The treadboard comprises in particular top locking holes, while the lower boundary strip of the roller blind comprises locking pins which point downwards, are associated with the locking holes and can engage when the roller blind is closed and the treadboard retracted. As a result of the invention, there is no need for a separate locking mechanism, which is usually provided, for a sliding step. As the sliding or roller blind can only be closed if the sliding step is correctly retracted, there is also no need for a special control switch for the sliding step. The visual "door closing control" provides the control indication.

A plurality of locking holes may be provided in the treadboard in order, for example, also to make two locking pins of the roller blind engage when the treadboard is in the pulled-out position. According to the features of subclaims 3 and 4, the locking device may also be formed such that the closed roller blind is also locked.

The invention is explained in the following on the basis of an embodiment and with reference to the accompanying drawings, in which:
Figure 1 shows a sliding step of a fire engine in its retracted locked position and with a closed vertical roller blind,
Figure 2 is a section along the line A-A in Figure 1,
Figure 3 is a view similar to Figure 1 with an incorrectly closed roller blind, and
Figure 4 is a section along the line B-B in Figure 3.

According to the drawings a fire engine, which is not of interest here, comprises at least one lateral vertical roller blind (4) and at least one sliding step (1) at the underside of the roller blind (4), which step can be pulled manually out of an essentially horizontal position in which it is not used into a lateral horizontal position for use for the purpose of entering the interior when the roller blind (4) is open or to enable appliances to be easily removed from the interior. The sliding step (1) is retracted and the roller blind (4) closed when the vehicle is in motion.

Whereas according to the prior art two locking devices are generally required for the roller blind and the sliding step, the invention provides a combined locking device (2) for the roller blind (4) and the sliding step (1).

Fastening members (3) in the form of locking pins (8), which point vertically downwards, are disposed on the roller blind (4) at the lower end of the boundary strip (5) with the handle mounted thereon, while corresponding top locking holes (7) are formed in the front boundary profile (9) of the treadboard (6) of the sliding step (1). The locking holes (7) are adapted to the locking pins (8) in terms of diameter and spacing.

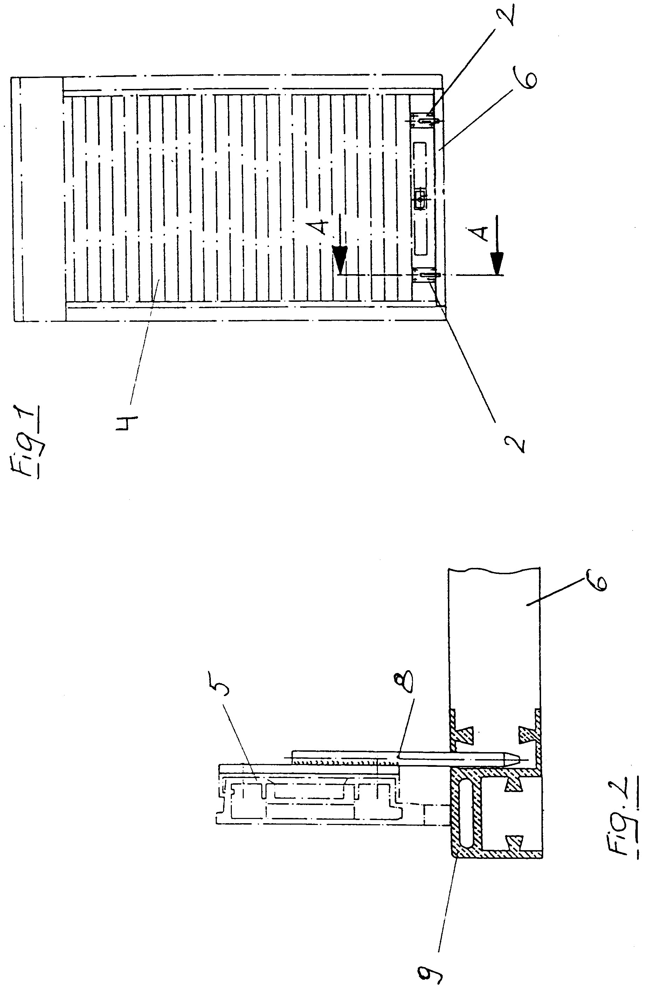

The roller blind (4) can only be closed if the treadboard (6) is completely retracted and the locking pins (8) therefore engage in the corresponding locking holes (7) in the retracted treadboard (6), as shown in Figure 2. If this is the case, the locking device (2) engages. The treadboard (6) of the sliding step (1) is reliably locked in the retracted position.

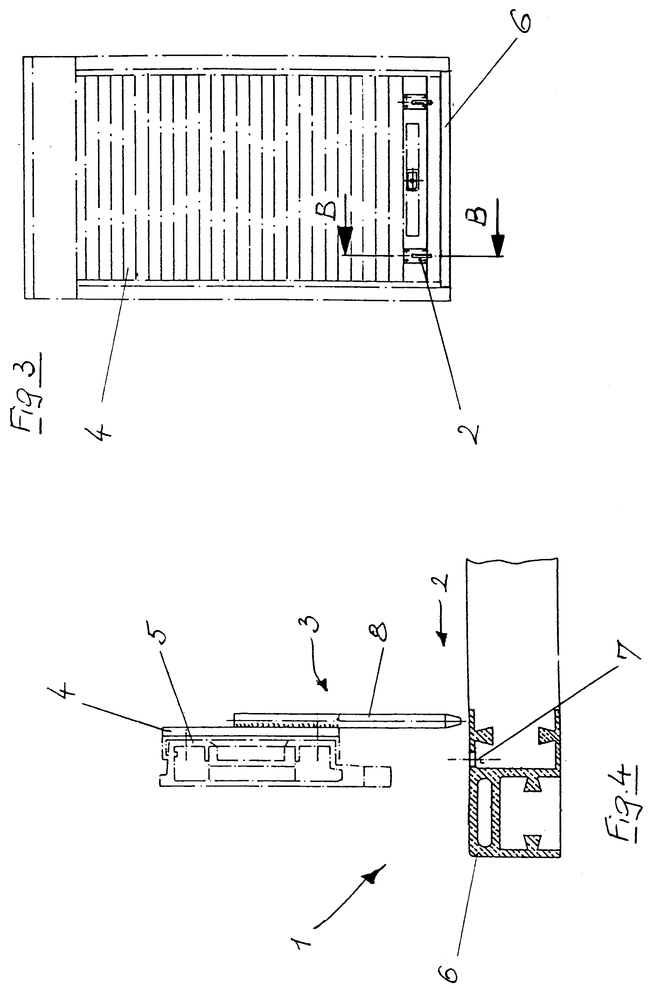

If the sliding step (1) is not correctly retracted, the locking pins (8) strike against the upper edge of the front boundary profile (9) and the roller blind (4) cannot be closed, as shown in particular in Figures 3 and 4. A gap remains between the lower boundary strip (5) of the roller blind (4) and the treadboard (6) which can easily be seen by an operator.

There is therefore no need for a separate locking mechanism, as is usually provided, for the sliding step. As the roller blind (4) can only be closed when the sliding step is correctly retracted, there is also no need for a special control switch for the sliding step. The "door closing control" provides the control indication.

## Claims

1. Sliding step (1) for a utility vehicle, in particular a fire engine, with a locking device (2) for locking a treadboard (6) in a retracted position in which it is not used, which treadboard (6) can be pulled out into an essentially horizontal position for use, characterised in that a part of the locking device (2) is a bottom fastening member (3) of an essentially vertical roller blind (4), which member can be made to interlock with the treadboard (6) when the roller blind (4) is closed.

2. Sliding step according to claim 1, characterised in that the treadboard (6) comprises top locking holes (7) and the lower boundary strip (5) of the roller blind (4) comprises locking pins (8) which are engaged in the locking holes (7) when the roller blind is closed and the treadboard (6) is retracted.

3. Sliding step according to claim 2, characterised in that the locking pins (8) are snap pins which can be brought into a positive, spring-loaded interlocked state with the locking holes, in which state the roller blind (4) is also locked.

4. Sliding step according to claim 3, characterised in that the snap pin is laterally spring-loaded and formed with a lower hook which can be inserted against the power of the spring in a corresponding angular ramp-like locking hole in the sliding step and engage laterally in this hole after the ramp through spring power, with a release mechanism, which can be manually actuated, being provided for the hook.

5. sliding step according to one of claims 1 to 4, characterised in that both the front (9) and the rear boundary profile of the treadboard (6) comprise locking holes (7).

## Patentansprüche

1. Schiebetritt (1) für ein Nutzfahrzeug, insbesondere ein Feuerwehrfahrzeug, mit einer Verriegungseinrichtung (2) zum Verriegeln einer Trittplatte (6) in einer zurückgeschobenen Position, in der sie nicht gebraucht wird, welche Trittplatte (6) zum Gebrauch in eine im wesentlichen waagerechte Position herausgezogen werden kann, dadurch **gekennzeichnet**, daß ein Teil der Verriegungseinrichtung (2) ein Bodenbefestigungsglied (3) eines im wesentlichen senkrechten Rolladens (4) ist, welches Glied in der Lage ist, mit der Trittplatte (6) in verriegelte Stellung zu gehen, wenn der Rolladen (4) geschlossen ist.

2. Schiebetritt nach Anspruch 1, dadurch **gekennzeichnet**, daß die Trittplatte (6) obere Verriegelungsbohrungen (7) und die untere Randleiste (5) des Rolladens (4) Verriegelungsstifte (8) aufweist, die in die Verriegelungsbohrungen (7) eintreten, wenn der Rolladen geschlossen und die Trittplatte (6) eingeschoben ist.

3. Schiebetritt nach Anspruch 2, dadurch **gekennzeichnet**, daß die Verriegelungsstifte (8) Raststifte sind, die in eine definierte, federbelastete, verriegelte Stellung mit den Verriegelungsbohrungen gebracht werden können, in der der Rolladen (4) ebenfalls verriegelt ist.

4. Schiebetritt nach Anspruch 3, dadurch **gekennzeichnet**, daß der Raststift seitlich federbelastet und mit einem unteren Haken versehen ist, der entgegen der Kraft der Feder in eine entsprechende abgewinkelte, rampenförmige Verriegelungsbohrung in dem Schiebetritt eingefügt werden kann und seitlich in diese Bohrung nach der Rampe über Federkraft eingreift, mit einem manuell betätigbaren Lösemechanismus für den Haken.

5. Schiebetritt nach einem der Ansprüche 1 bis 4, dadurch **gekennzeichnet**, daß sowohl das vordere (9) als auch das hintere Randprofil der Trittplatte (6) Verriegelungsbohrungen (7) aufweist.

## Revendications

1. Marche coulissante (1) pour un véhicule utilitaire, en particulier une pompe à incendie, comportant un dispositif de verrouillage (2) pour verrouiller un giron de marche (6) dans une position rétractée dans laquelle il n'est pas utilisé, ce giron de marche (6) pouvant être tiré vers l'extérieur pour venir dans une position essentiellement horizontale d'utilisation, caractérisée en ce qu'une partie du dispositif de verrouillage (2) est un élément de fixation inférieur (3) d'un store essentiellement vertical (4), cet élément pouvant être conçu pour s'enclencher avec le giron de marche (6) lorsque le store (4) est fermé.

2. Marche coulissante selon la revendication 1, caractérisée en ce que le giron de marche (6) comprend des trous de verrouillage supérieurs (7) et en ce que la bande de limite inférieure (5) du store (4) comprend des broches de verrouillage (8) qui s'engagent dans les trous de verrouillage (7) lorsque le store (4) est fermé et lorsque le giron de marche (6) est rétracté.

3. Marche coulissante selon la revendication 2, caractérisée en ce que les broches de verrouillage (8) sont des broches d'enclenchement pouvant être amenées dans un état d'enclenchement positif, poussé par un ressort, avec les trous de verrouillage, état dans lequel le store (4) est également verrouillé.

4. Marche coulissante selon la revendication 3, caractérisée en ce que la broche d'enclenchement est poussée latéralement par un ressort et munie d'un crochet inférieur qu'on peut introduire, contre la force du ressort, dans un trou de verrouillage en forme de rampe inclinée correspondant de la marche coulissante, et qui s'engage latéralement dans ce trou, après la rampe, sous l'action de la force du ressort, un mécanisme de libération actionnable manuellement étant prévu pour le crochet.

5. Marche coulissante selon l'une des revendications 1 à 4, caractérisée en ce qu'aussi bien le profil de limite avant que le profil de limite arrière du giron de marche (6) comprennent des trous de verrouillage (7).
